# EUROPEAN PATENT APPLICATION

(11) **EP 4 761 201 A1**
(43) Date of publication of application: **17.06.2026**
(21) Application number: 24824737.1
(22) Date of filing: 10.05.2024
(51) Int. Cl.: H04L 41/0663, H04W 24/04

(54) **COMMUNICATION DATA TRANSMISSION METHODS AND APPARATUSES, ELECTRONIC DEVICE, STORAGE MEDIUM AND SYSTEM, AND COMPUTER PROGRAM PRODUCT**

(30) Priority: 10.08.2023 CN 202311008052
(71) Applicant: China Mobile Group Design Institute Co., Ltd., Beijing 100080 (CN); China Mobile Communications Group Co., Ltd., Beijing 100032 (CN)
(72) Inventor: HE, Zheng, Beijing 100080 (CN); QU, Shaokai, Beijing 100080 (CN); LI, Xin, Beijing 100080 (CN); GAO, Zhiying, Beijing 100080 (CN); TAN, Zhe, Beijing 100080 (CN); WANG, Yingchun, Beijing 100080 (CN); HUANG, Letian, Beijing 100080 (CN); TAO, Yuan, Beijing 100080 (CN); YANG, Xi, Beijing 100080 (CN); BAI, Ruixue, Beijing 100080 (CN); WANG, Liqiang, Beijing 100080 (CN); DING, Yifan, Beijing 100080 (CN); DOU, Xiaolei, Beijing 100080 (CN); GUO, Yanchun, Beijing 100080 (CN); XI, Jianhua, Beijing 100080 (CN); GAO, Junshi, Beijing 100080 (CN); YANG, Tianpu, Beijing 100080 (CN); WANG, Dongbing, Beijing 100080 (CN); SUN, Shuo, Beijing 100080 (CN); ZHOU, Huajun, Beijing 100080 (CN); LI, Chang, Beijing 100080 (CN); YU, Wenjing, Beijing 100080 (CN); ZENG, Zhenlin, Beijing 100080 (CN); LI, Deli, Beijing 100080 (CN); WANG, Linli, Beijing 100080 (CN); LIU, Dongmei, Beijing 100080 (CN); LI, Fenying, Beijing 100080 (CN); HU, Jitao, Beijing 100080 (CN); WANG, Yalong, Beijing 100080 (CN); YAO, Binbin, Beijing 100080 (CN); ZHU, Xiaoqing, Beijing 100080 (CN); ZHANG, Haiyun, Beijing 100080 (CN); WANG, Zuheng, Beijing 100080 (CN)
(74) Representative: Maiwald GmbH
(86) International application number: PCT/CN2024/092295
(87) International publication number: WO 2025/030955

(57) **Abstract**

The invention provides a method and an apparatus for transmitting communication data, an electronic device, a storage medium and a system, and relates to a field of communication technology. The method is applied to a gateway device connected with a user plane function network element. The method includes: receiving service data sent by the user plane function network element, in which in a case that a first network fixed access device receives a service data sending request sent by a first user terminal and a failure occurs to a fixed network accessed by the first network fixed access device, the first network fixed access device sends the service data to a first wireless network access device, and the first wireless network access device sends the service data to a core network; and sending the service data to a second user terminal connected with a second network fixed access device. The communication data transmission scheme provided in the invention can improve transmission reliability of service data.

## Description

### CROSS-REFERENCE TO RELATED APPLICATION

The present application is based on and claims a priority to Chinese Patent Application Serial No. 202311008052.9, filed with the State Intellectual Property Office of P. R. China on August 10, 2023, the contents of which are incorporated herein by reference in their entireties for all purposes.

### TECHNICAL FIELD

The invention relates to a field of communication technology, in particular to a method and an apparatus for transmitting communication data, an electronic device, a storage medium and a system.

### BACKGROUND

During development of the communication technology, a communication operator can deploy a fixed network and a wireless network to transmit communication data based on the fixed network or the wireless network.

In the related art, a communication network can be used for a user terminal to access the fixed network for end-to-end communication. For example, a terminal that acts as a sender of service data can send the service data to a terminal that acts as a receiver of the service data through the fixed network.

However, in a communication method based on the fixed network provided by in the related art, once a failure occurs to the fixed network, the communication cannot be performed, resulting in poor reliability of user communication based on the fixed network, thereby affecting the user's communication experience.

### SUMMARY

The invention provides a method and an apparatus for transmitting communication data, an electronic device, a storage medium and a system, which may improve transmission reliability of service data. The technical solution of the invention can be described below.

According to a first aspect of embodiments of the invention, a method for transmitting communication data is provided. The method is performed by a gateway device connected with a user plane function network element, and the method includes: receiving service data sent by the user plane function network element, in which in a case that a first network fixed access device receives a service data sending request sent by a first user terminal and determines that a failure occurs to a fixed network accessed by the first network fixed access device, the service data is sent by the first network fixed access device to a first wireless network access device, and sent by the first wireless network access device to a core network, wherein the core network comprises the user plane function network element; and sending the service data to a second user terminal connected with a second network fixed access device.

According to a second aspect of embodiments of the invention, a method for transmitting communication data is provided. The method is applied to a second network fixed access device, and the method includes: receiving service data sent by a gateway device, in which in a case that a first network fixed access device receives a service data sending request sent by a first user terminal and determines that a failure occurs to a fixed network accessed by the first network fixed access device, after the first network fixed access device sends the service data to a first wireless network access device and the first wireless network access device sends the service data to a core network, the service data is sent to the gateway device through a user plane function network element of the core network; and sending the service data to a second user terminal.

According to a third aspect of embodiments of the invention, an apparatus for transmitting communication data is provided. The apparatus is a gateway device connected with a user plane function network element, and the apparatus includes: a first receiving module, configured to receive service data sent by the user plane function network element, in which in a case that a first network fixed access device receives a service data sending request sent by a first user terminal and determines that a failure occurs to a fixed network accessed by the first network fixed access device, the first network fixed access device sends the service data to a first wireless network access device, and the first wireless network access device sends the service data to a core network, in which the core network comprises the user plane function network element; and a first sending module, configured to send the service data to a second user terminal connected with a second network fixed access device.

According to a fourth aspect of embodiments of the invention, an apparatus for transmitting communication data is provided. The apparatus is a second network fixed access device, and the apparatus includes: a second receiving module, configured to receive service data sent by a gateway device, in which in a case that a first network fixed access device receives a service data sending request sent by a first user terminal and determines that a failure occurs to a fixed network accessed by the first network fixed access device, after the first network fixed access device sends the service data to a first wireless network access device, and the first wireless network access device sends the service data to a core network, the service data is sent to the gateway device through a user plane function network element of the core network; and a second sending module, configured to send the service data to a second user terminal.

According to a fifth aspect of embodiments of the invention, an electronic device is provided. The electronic device is a gateway device, and includes: a processor; and a memory storing a program. The program includes instructions, which when executed by the processor, cause the processor to perform the method according to the first aspect of the invention.

According to a sixth aspect of embodiments of the invention, an electronic device is provided. The electronic device is a second network fixed access device, and includes: a processor; and a memory storing a program. The program includes instructions, which when executed by the processor, cause the processor to perform the method according to the second aspect of the invention.

According to a seventh aspect of embodiments of the invention, a non-transitory computer-readable storage medium having computer instructions stored thereon is provided. The computer instructions are used to enable a computer to perform the method according to the first aspect or the second aspect of the invention.

According to an eighth aspect of embodiments of the invention, a communication data transmission system is provided. The communication data transmission system includes: a gateway device, a first network fixed access device that accesses a fixed network, and a second network fixed access device that accesses a fixed network. The gateway device is connected with a network side core device and a user plane function network element respectively. In a case of receiving a service data sending request sent by a first user terminal and determining that a failure occurs to the fixed network accessed by the first network fixed access device, the first network fixed access device sends the service data to a first wireless network access device to enable the first wireless network access device to send the service data to a core network. The core network includes the user plane function network element. The gateway device receives the service data sent by the user plane function network element and sends the service data to a second user terminal connected with the second network fixed access device.

With a method and an apparatus for transmitting communication data, an electronic device, a storage medium and a system provided by embodiments of the invention, after the first network fixed access device that acts as a sender of service data determines that a failure occurs to the fixed network accessed by the first network fixed access device, the service data can be sent to a wireless network access device to enable the wireless network access device to send the service data to the core network. Further, after the gateway device obtains the service data from the user plane function network element of the core network, the service data is sent to the second user terminal connected with the second network fixed access device. In this way, transmission reliability of service data can be improved by transmitting the service data through the wireless network in the case that a failure occurs to the fixed network in a communication scenario based on the fixed network.

### BRIEF DESCRIPTION OF THE DRAWINGS

Further details, features and advantages of the invention are disclosed in the following description of embodiments in conjunction with the accompanying drawings.
FIG. 1 is a schematic diagram of a communication data transmission system according to an embodiment of the invention.
FIG. 2 is a flowchart of a method for transmitting communication data according to an embodiment of the invention.
FIG. 3 is a flowchart of a method for transmitting communication data according to another embodiment of the invention.
FIG. 4 is a block diagram of an apparatus for transmitting communication data according to an embodiment of the invention.
FIG. 5 is a block diagram of an apparatus for transmitting communication data according to another embodiment of the invention.
FIG. 6 is a schematic diagram of a chip according to an embodiment of the invention.
FIG. 7 is a schematic diagram of an electronic device capable of implementing an embodiment of the invention.

### DETAILED DESCRIPTION

The embodiments of the invention will be described in more detail below with reference to the accompanying drawings. Although some embodiments of the invention are shown in the accompanying drawings, it should be understood that the invention can be implemented in various forms and should not be construed as being limited to the embodiments described herein. Instead, these embodiments are provided for a more thorough and complete understanding of the invention. It should be understood that the drawings and embodiments of the invention are only for illustrative purposes and are not intended to limit the protection scope of the invention.

It should be understood that various steps described in implementations of method embodiments of the invention can be performed in different orders and/or in parallel. In addition, the implementations of the method embodiments of the invention may include additional steps and/or omit the steps shown. The scope of the invention is not limited in this respect.

The term "comprising" and its variations used herein are open inclusions, i.e., "comprising but not limited to". The term "based on" is "based at least in part on". The term "one embodiment" means "at least one embodiment", the term "another embodiment" means "at least one other embodiment", and the term "some embodiments" means "at least some embodiments". The relevant definitions of other terms will be given in the following description. It should be noted that the concepts of "first" and "second" mentioned in this disclosure are only used to distinguish different devices, modules or units, and are not used to limit the order or interdependence of the functions performed by these devices, modules or units.

It should be noted that the modifications of "one" and "multiple" mentioned in this disclosure are illustrative rather than restrictive. Those skilled in the art should understand that unless otherwise clearly indicated in the context, they should be understood as "one or more".

The names of messages or information exchanged between multiple devices in the embodiments of the invention are only for illustrative purposes, and are not used to limit the scope of these messages or information.

In the related art, a communication service can be provided to users based on a fixed network. A sender of service data may send the service data to a network access device associated with the sender of service data. The network access device sends the service data to be transmitted to a fixed network, and transmits the communication data to a network access device of a receiver of the service data through the fixed network. The network access device of the receiver of the service data sends the service data to the receiver of the service data, in which the network access device is an access device used for the fixed network.

However, if a failure occurs to the fixed network, for example, a failure occurs to a network device in the fixed network or an optical fiber breaks down, communication cannot be performed, resulting in poor reliability of user communication based on the fixed network, thereby affecting the user's communication experience.

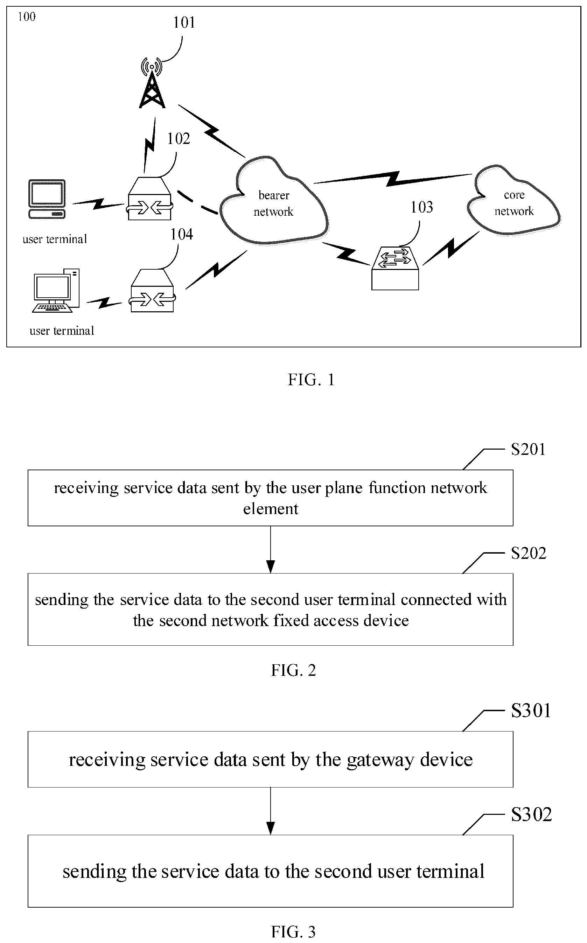

FIG. 1 is a schematic diagram of a communication data transmission system according to an embodiment of the invention. As illustrated in FIG. 1, the implantation scenario 100 includes a first wireless network access device 101, a first network fixed access device 102, a gateway device 103 and a second network fixed access device 104. The first wireless network access device 101 is configured to enable a terminal or network device that acts as a sender of service data to access a network. The first network fixed access device 102 can be a customer premise equipment (CPE) in a fixed network, and can be configured to send the service data sent by a user terminal that acts as the sender of the service data to the fixed network. The second network fixed access device 104 can be a CPE in the fixed network, and can be configured to send the service data from the fixed network to a user terminal that acts as a receiver of the service data to the fixed network. The gateway device 103 is configured to connect with a user plane function network element (not shown in FIG. 1) in a core network, to implement a communication data transmission scheme in the embodiments of the invention.

It should be noted that, in an actual scenario, in addition to the wireless network access devices, the network access devices and the gateway devices, there may be other devices, and the wireless network access devices may include wireless base stations or communication satellites, etc. As shown in FIG. 1, when the gateway device executes the communication data transmission scheme provided by the embodiments of the invention, in a case of receiving a service data sending request sent by a first user terminal and determining that a failure occurs to the fixed network accessed by the first network fixed access device, the first network fixed access device 102 sends the service data to the first wireless network access device 101, and the first wireless network access device 101 sends the service data to the core network which includes the user plane function network element. Further, the gateway device 103 receives the service data sent by the user plane function network element, and sends the service data to the second user terminal connected with the second network fixed access device.

FIG. 2 shows a flowchart of a method for transmitting communication data according to an embodiment of the invention. The method can be applied to the gateway device, which is connected to the user plane function network element. As shown in FIG. 2, the method provided in the embodiment of the invention may include the following steps.

Step S201, service data sent by the user plane function network element is received.

In the case that the first network fixed access device receives a service data sending request sent by the first user terminal and determines that a failure occurs to the fixed network accessed by the first network fixed access device, the first network fixed access device sends the service data to the first wireless network access device, and the first wireless network access device sends the service data to the core network which includes the user plane function network element.

Step S202, the service data is sent to the second user terminal connected with the second network fixed access device.

In summary, in the method for transmitting communication data provided in the embodiment of the invention, after the first network fixed access device associated with the sender of the service data determines that a failure occurs to the fixed network accessed by the first network fixed access device, the service data can be sent to the wireless network access device, and the wireless network access device can send the service data to the core network. Further, after the gateway device obtains the service data from the user plane function network element of the core network, the gateway device sends the service data to the second user terminal connected with the second network fixed access device. In this way, in the communication scenario based on the fixed network, in the case where the fixed network fails, the service data is transmitted through the wireless network, thereby improving transmission reliability of the service data.

The specific implementation of each step of the embodiment shown in FIG. 2 will be described in detail as follows.

In the step S201, the gateway device receives the service data sent by the user plane function network element.

In the embodiments of the invention, the user plane function network element can be determined based on the architecture of the communication network, which is not limited to the invention. For example, if the communication network is a fourth-generation wireless cellular technology (4G) communication network, the user plane function network element may include a serving gateway (SGW) in the core network of the 4G communication network. If the communication network is a fifth-generation wireless cellular technology (5G) communication network, the user plane function network element may include a user data plane function (UPF) network element in the core network of the 5G communication network. The user plane function network element is used to enable data traffic from a bearer network to access the core network, or used to send the data traffic from the core network to the bearer network which forwards the data traffic to the user terminal.

It should be noted that, generally, in a communication process between the first user terminal and the second user terminal, in order to reduce a communication cost, the first user terminal and the second user terminal can communicate based on the fixed network in the bearer network. In the scenario where the first user terminal acts as the sender of the service data, the first network fixed access device can receive the service data from the first user terminal, and send the service data to the second user terminal through the fixed network accessed by the first network fixed access device, or the first network fixed access device can receive the service data sent by the second user terminal through the fixed network accessed by the first network fixed access device, and forward the service data to the first user terminal. Similarly, in the scenario where the second user terminal acts as the sender of the service data, the second network fixed access device can receive the service data from the second user terminal, and send the service data to the first user terminal through the fixed network accessed by the second network fixed access device, or the second network device can receive the service data sent by the first user terminal through the fixed network accessed by the first network fixed access device, and forward the service data to the second user terminal.

In an optional implementation, the implementation of the invention can be described by taking the scenario where the first user terminal acts as the sender of the service data as an example. In the case where the first network fixed access device receives the service data sending request sent by the first user terminal and determines that a failure occurs to the fixed network accessed by the first network fixed access device, the first network fixed access device needs to send the service data to the first wireless network access device, and the first wireless network access device sends the service data to the core network which includes the user plane functional network element. The first wireless network access device may be the wireless network access device closest to the first network fixed access device.

In an optional implementation, the process of the first user terminal sending the service data sending request to the first network fixed access device may include: the first user terminal sending the service data sending request to the first network fixed access device based on a wireless routing device. For example, the wireless user terminal sends the service data sending request to the wireless routing device via a wireless link, and the wireless routing device sends the service data sending request to the first network fixed access device via a wired link. Alternatively, the first user terminal sends the service data sending request to the first network fixed access device based on a wired link. For example, a desktop computer sends the service data sending request to the first network fixed access device based on a wired link. It can be understood that the service data sending request is generated by the first user terminal in response to a service data sending operation, based on the service data to be sent. The service data can be determined based on a current service scenario, which is not limited to the embodiment of the invention. For example, in a session scenario, the service data can be the content of the session, such as a session message, or a video, etc.

In an optional implementation, the process of the first network fixed access device determining whether a failure occurs to the fixed network accessed by the first network fixed access device may include: obtaining a transmission quality parameter of the service data in the fixed network accessed by the first network fixed access device, and when the transmission quality parameter is greater than a parameter threshold, it can be determined that a failure occurs to the fixed network to which the first network fixed access device accesses. The transmission quality parameter of the service data may include parameters, such as packet loss rate, jitter and/or delay of the service data during transmission, used to characterize the transmission quality of the service data, and the parameter threshold can be determined based on actual needs, which are not limited to the embodiment of the invention.

In an optional implementation, a line protection mechanism can usually be configured in the network access device of the fixed network, such as an automatic protection switching (APS) mechanism, or an optical line protection (OLP) mechanism, or an optical multiplex section protect (OMSP), etc. The process of the first network fixed access device determining whether a failure occurs to the fixed network accessed by the first network fixed access device may include: after the first network fixed access device determines that the line protection mechanism in the first network fixed access device fails to execute, determining that a failure occurs to the fixed network accessed by the first network fixed access device.

It should be noted that in the embodiment of the invention, the process of the first network fixed access device sending the service data to the first wireless network access device, and the first wireless network access device sending the service data to the core network may be implemented as follows. The first network fixed access device may send the service data carried in the service data sending request sent by the first user terminal to the first wireless network access device through a wireless link, and the first wireless network access device may send the service data to the core network based on the bearer network, and the user plane function network element of the core network is used to forward the service data to the gateway device, so that the gateway device forwards the service data to the second user terminal. It should be noted that in the embodiment of the invention, the first network fixed access device may send an access request to the first wireless network access device through a wireless communication module in the first network fixed access device to pre-establish a wireless connection between the first network fixed access device and the first wireless network access device.

It should be noted that in the embodiment of the invention, when the service data needs to be transmitted based on the wireless network, since the wireless network transmits messages based on the Internet Protocol (IP), and the fixed network transmits data through labels, in order to facilitate transmission of the service data through the wireless network, the service data can be encapsulated as an IP message for transmission. For example, the first network fixed access device can encapsulate the service data into a generic routing encapsulation (GRE) message and send the GRE message to the core network. Further, the user plane function network element of the core network can forward the GRE message to the gateway device.

In an optional implementation, after the user plane function network element of the core network sends the service data to the gateway device, the gateway device can receive the service data sent by the user plane function network element. Optionally, the service data received by the gateway device can be a GRE message sent by the user plane function network element.

In the step S202, the gateway device may send the service data to the second user terminal connected with the second network fixed access device.

In the embodiments of the invention, the network side core device is a core layer device of the bearer network, and the network side core device may be determined based on the architecture of the communication network, which is not limited in the invention. For example, if the communication network is a 4G communication network, and the bearer network of the 4G communication network is a packet transport network (PTN), then the network side core device may be an L3 PTN landing device or an L3 PTN scheduling device. If the communication network is a 5G communication network, and the bearer network of the 5G communication network is a slicing packet network (SPN), then the network side core device may be a network provider edge NPE device.

It should be noted that in the embodiments of the invention, for the second user terminal acting as the receiver of the service data, the second user terminal may obtain the service data from the fixed network accessed by the second network fixed access device based on the second network fixed access device. Generally, a failure may occur to the fixed network accessed by the second network fixed access device. Therefore, the second network fixed access device can send a connection request to the second wireless network access device to establish a wireless connection between the second network fixed access device and the second wireless network access device.

In an optional implementation, the process of the gateway device sending the service data to the second user terminal connected with the second network fixed access device may include: in the case that a failure occurs to the fixed network accessed by the second network fixed access device, sending the service data to the user plane function network element, so that the user plane function network element sends the service data to the second wireless network access device, and the second wireless network access device sends the service data to the second network fixed access device, and the second network fixed access device sends the service data to the second user terminal. In this way, with the invention, the service data can be sent to the second user terminal connected with the second network fixed access device through the wireless network in the case that a failure occurs to the fixed network accessed by the second network fixed access device, which can further improve transmission reliability of the service data.

In an optional implementation, the service data is a GRE message encapsulated based on the GRE protocol, and the process of sending the service data to the user plane functional network element so that the user plane functional network element sends the service data to the second wireless network access device and the second wireless network access device sends the service data to the second network fixed access device may include: sending the GRE message to the user plane functional network element so that the user plane functional network element sends the GRE message to the second wireless network access device and the second wireless network access device sends the GRE message to the second network fixed access device. It can be understood that in the embodiments of the invention, a GRE tunnel can be established between devices that can transmit GRE messages to transmit GRE messages through the GRE tunnel between the devices. The service data can be transmitted through the IP message identifiable by the wireless network to ensure that the function of transmitting the service data through the wireless network is realized in the event that a failure occurs to the fixed network, so as to improve transmission reliability of the service data.

It should be noted that in the embodiments of the invention, the GRE message sent by the user plane functional network element and received by the gateway device and the GRE message sent by the gateway device to the user plane functional network element are sent through different GREs.

In an optional implementation, the gateway device is also connected to the network side core device, and the process of the gateway device sending the service data to the second user terminal connected with the second network fixed access device may include: in the case where the fixed network accessed by the second network fixed access device operates normally, sending the service data to the network side core device, so that the network side core device sends the service data to the second network fixed access device based on the fixed network accessed by the second network fixed access device, and the second network fixed access device sends the service data to the second user terminal. In the case where the fixed network accessed by the second network fixed access device is normal, the service data can be sent to the second user terminal connected with the second network fixed access device through the fixed network.

It should be noted that in the embodiments of the invention, in order to realize the device management for the first network fixed access device and the second network fixed access device, the gateway device can be connected to a network management system (NMS) network element. The gateway device can be used as a gateway network element of the data communication network (DCN), and the gateway device can receive device management data sent by the first network fixed access device or the second network fixed access device, and send the device management data to the NMS network element. The device management data can be device configuration information, etc., which is not limited in the embodiments of the invention. The first network fixed access device and/or the second network fixed access device can be managed by the gateway device to reduce management complexity of the network access device.

Optionally, the gateway device can receive the device management data of the first network fixed access device sent by the NMS network element, and send the device management data of the first network fixed access device to the first network fixed access device. Or the gateway device can receive the device management data of the second network fixed access device sent by the NMS network element, and send the device management data of the second network fixed access device to the second network fixed access device. The device management data can be device operation and maintenance data, etc.

It should be noted that in the embodiments of the invention, after the first network fixed access device determines that the fixed network accessed by the first network fixed access device has returned to normal (i.e., the failure has been repaired), the connection with the first wireless network access device can be disconnected, and the service data can be transmitted through the fixed network accessed by the first network fixed access device. Similarly, after the second network fixed access device determines that the fixed network accessed by the second network fixed access device has returned to normal, the connection with the second wireless network access device can be disconnected, and the service data can be received through the fixed network accessed by the second network fixed access device.

The technical solution provided by the embodiments of the invention has been introduced above mainly from the perspective of the gateway device. It can be understood that in order to implement the above functions, the gateway device includes a hardware structure and/or software module performing each function. A person skilled in the art may be further aware that, in combination with the examples described in the embodiments disclosed in this specification, units and algorithm steps may be implemented by electronic hardware, computer software, or a combination thereof. Whether the functions are performed by hardware or driving hardware with the computer software depends on particular applications and design constraint conditions of the technical solutions. A person skilled in the art may use different methods to implement the described functions for each particular application, but it should not be considered that the implementation goes beyond the scope of the present invention.

FIG. 3 shows a flowchart of a method for transmitting communication data according to an embodiment of the invention. The method can be applied to the second network fixed access device. As shown in FIG. 3, the method of the embodiment of the invention may include the following steps 301-302.

Step S301, service data sent by the gateway device is received.

In the case where the first network fixed access device receives the service data sending request sent by the first user terminal and determines that a failure occurs to the fixed network accessed by the first network fixed access device, after the first network fixed access device sends the service data to the first wireless network access device, and the first wireless network access device sends the service data to the core network, the service data is sent to the gateway device through the user plane functional network element of the core network.

Step S302, the service data is sent to the second user terminal.

In summary, with the method for transmitting communication data provided by the embodiment of the invention, after the first network fixed access device acting as the sender of the service data determines that a failure occurs to the fixed network accessed by the first network fixed access device, the service data can be sent to the wireless network access device so that the wireless network access device sends the service data to the core network. Further, after the gateway device obtains the service data from the user plane functional network element of the core network, the service data is sent to the second user terminal connected with the second network fixed access device. In this way, in the communication scenario based on the fixed network, in the case where the fixed network fails, the service data is transmitted through the wireless network, thereby improving transmission reliability of the second user terminal receiving the service data.

It should be noted that in the embodiments of the invention, the fixed network accessed by the second network fixed access device may be normal or may fail. In an optional implementation, the process of the second network fixed access device receiving the service data sent by the gateway device may include: in the case where a failure occurs to the fixed network accessed by the second network fixed access device, the gateway device sending the service data to the user plane functional network element in the core network, so that the user plane functional network element sends the service data to the second wireless network access device.

In an optional implementation, the process of the second network fixed access device receiving the service data sent by the gateway device may include: in the case where the fixed network accessed by the second network fixed access device operates normally, the gateway device sending the service data to the network side core device, so that the network side core device sends the service data to the second network fixed access device based on the fixed network accessed by the second network fixed access device.

In the embodiments of the invention, the functional units of the gateway device can be divided according to the above method embodiments. For example, each functional module can be divided according to the respective function, or two or more functions can be integrated into one processing module. The above integrated module can be implemented in the form of hardware or in the form of software functional modules. It should be noted that the division of modules in the embodiments of the invention is illustrative and is only a logical functional division. There may be other divisions in actual implementations.

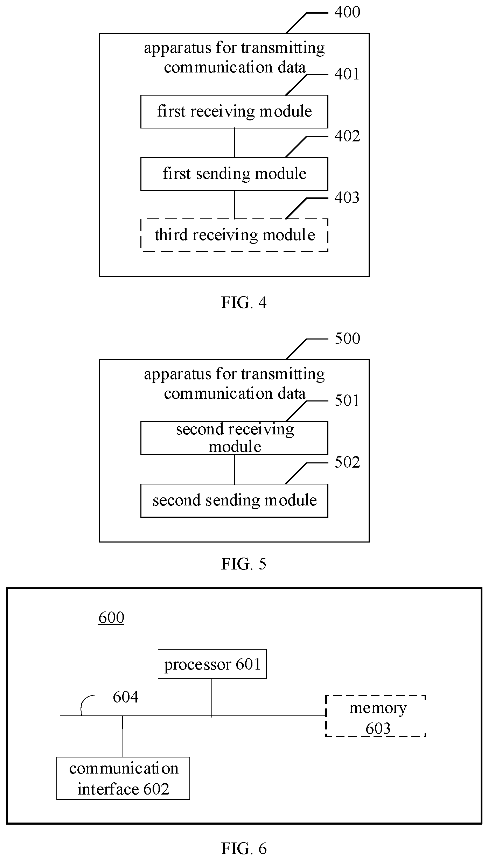

In the case of dividing each functional module according to the respective function, the embodiments of the invention provide an apparatus for transmitting communication data, which can be included in the gateway device or applied to a chip of the gateway device. FIG. 4 shows a schematic block diagram of the functional modules of the apparatus for transmitting communication data according to an embodiment of the invention. The apparatus for transmitting communication data is included in the gateway device, and the gateway device is connected to the user plane functional network element. As shown in FIG. 4, the apparatus 400 for transmitting communication data includes a first receiving module 401 and a first sending module 402.

The first receiving module 401 is configured to receive service data sent by the user plane function network element. In a case that a first network fixed access device receives a service data sending request sent by a first user terminal and determines that a failure occurs to a fixed network accessed by the first network fixed access device, the first network fixed access device sends the service data to a first wireless network access device, and the first wireless network access device sends the service data to a core network. The core network comprises the user plane function network element.

The first sending module 402 is configured to send the service data to a second user terminal connected with a second network fixed access device.

Optionally, the first sending module 402 is configured to, in a case that failure occurs to a fixed network accessed by the second network fixed access device, send the service data to the user plane function network element, so that the user plane function network element sends the service data to a second wireless network access device, the second wireless network access device sends the service data to the second network fixed access device, and the second network fixed access device sends the service data to the second user terminal.

Optionally, the service data is a generic routing encapsulation (GRE) message encapsulated based on a GRE protocol. The first sending module 402 is configured to send the GRE message to the user plane function network element, so that the user plane function network element sends the GRE message to the second wireless network access device and the second wireless network access device sends the GRE message to the second network fixed access device.

Optionally, the first sending module 402 is configured to, in a case that a fixed network accessed by the second network fixed access device operates normally, send the service data to the network side core device, so that the network side core device sends the service data to the second network fixed access device based on the fixed network accessed by the second network fixed access device, and the second network fixed access device sends the service data to the second user terminal.

Optionally, the apparatus further comprises a third receiving module 403, configured to: receive device management data sent by the first network fixed access device or the second network fixed access device and send the device management data to a network management system (NMS) network element connected with the gateway device.

In the embodiments of the invention, the functional units of the second network fixed access device can be divided according to the above method embodiments. For example, each functional module can be divided according to the respective function, or two or more functions can be integrated into one processing module. The above integrated module can be implemented in the form of hardware or in the form of software functional modules. It should be noted that the division of modules in the embodiments of the invention is illustrative and is only a logical functional division. There may be other divisions in actual implementations.

In the case of dividing each functional module according to the respective function, the embodiments of the invention provide an apparatus for transmitting communication data, which can be the second network fixed access device or applied to a chip of the second network fixed access device. FIG. 5 shows a schematic block diagram of the functional modules of the apparatus for transmitting communication data according to an embodiment of the invention. The apparatus for transmitting communication data is included in the second network fixed access device. As shown in FIG. 5, the apparatus 500 for transmitting communication data includes a second receiving module 501 and a second sending module 502.

The second receiving module 501 is configured to receive service data sent by a gateway device. In a case that a first network fixed access device receives a service data sending request sent by a first user terminal and determines that a failure occurs to a fixed network accessed by the first network fixed access device, after the first network fixed access device sends the service data to a first wireless network access device, and the first wireless network access device sends the service data to a core network, the service data is sent to the gateway device through a user plane function network element of the core network.

The second sending module 502 is configured to send the service data to a second user terminal.

FIG. 6 shows a schematic block diagram of a chip according to an embodiment of the invention. As shown in FIG. 6, the chip 600 includes one or more than two (including two) processors 601 and a communication interface 602. The communication interface 602 can support a server to perform data sending and receiving steps in the above method, and the processor 601 can support the server to perform data processing steps in the above method.

Optionally, as shown in FIG. 6, the chip 600 also includes a memory 603. The memory 603 can include a read-only memory and a random access memory, and provide operation instructions and data to the processor. A portion of the memory can also include a non-volatile random access memory (NVRAM).

In some embodiments, as shown in FIG. 6, the processor 601 performs corresponding operations by calling the operation instructions stored in the memory (the operation instructions can be stored in the operating system). The processor 601 controls any one of the processing operations of the terminal device, and the processor can also be called a central processing unit (CPU). The memory 603 can include a read-only memory and a random access memory, and provide instructions and data to the processor 601. A portion of the memory 603 can also include NVRAM. In the application, the memory, the communication interface and the memory are coupled together through a bus system, the bus system may include a power bus, a control bus and a status signal bus in addition to a data bus. However, for the sake of clarity, various buses are marked as bus system 604 in FIG. 6.

The method disclosed in the above embodiments of the invention can be applied to a processor or implemented by a processor. The processor may be an integrated circuit chip with a signal processing capability. In the implementation process, each step of the above method can be completed by an integrated logic circuit in the form of hardware or an instruction in the form of software in the processor. The above processor may be a general-purpose processor, a digital signal processor (DSP), an ASIC, a field-programmable gate array (FPGA) or other programmable logic devices, discrete gates or transistor logic devices, discrete hardware components. The methods, steps and logic block diagrams disclosed in the embodiments of the invention can be implemented or executed. The general-purpose processor may be a microprocessor, or the processor may be any conventional processor, etc. The steps of the method disclosed in the embodiments of the invention can be directly embodied as being executed by a hardware decoding processor, or executed by a combination of hardware structure and software modules in a decoding processor. The software module may be located in a storage medium which is known in the art, such as a random access memory, a flash memory, a read-only memory, a programmable read-only memory, or an electrically erasable programmable memory, a register, etc. The storage medium is located in the memory, and the processor reads information in the memory and completes the steps of the above method in combination with its hardware.

The embodiments of the invention also provide an electronic device, including: at least one processor; and a memory connected to the at least one processor communicatively. The memory stores a computer program executable by the at least one processor, and the computer program is used to enable the electronic device to perform the method according to the embodiments of the invention when it is executed by the at least one processor. The electronic device may be the gateway device or the second network fixed access device.

The embodiments of the invention also provide a non-transitory computer readable storage medium having a computer program stored thereon. The computer program is used to enable a computer to perform the method according to the embodiments of the invention when it is executed by a processor of the computer.

The embodiments of the invention also provide a computer program product, including a computer program. The computer program is used to enable a computer to perform the method according to the embodiments of the invention when it is executed by a processor of the computer.

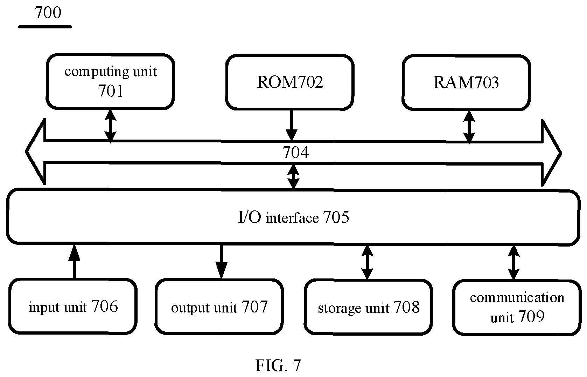

With reference to FIG. 7, a block diagram of an electronic device 700 that can be used as the gateway device or the second network fixed access device of the invention will now be described, which is an example of a hardware device that can be applied to various aspects of the invention. The electronic device is intended to represent various forms of digital electronic computer devices, such as laptop computers, desktop computers, workstations, personal digital assistants, servers, blade servers, mainframe computers, and other suitable computers. The electronic device can also represent various forms of mobile devices, such as personal digital processors, cellular phones, smart phones, wearable devices, and other similar computing devices. The components, their connections and relationships, and their functions shown in the invention are merely examples and are not intended to limit the implementation of the invention described and/or required herein.

As shown in FIG. 7, the electronic device 700 includes a computing unit 701, which can perform various appropriate actions and processes according to a computer program stored in a read-only memory (ROM) 702 or a computer program loaded from a storage unit 708 into a random access memory (RAM) 703. In the RAM 703, various programs and data required for the operations of the device 700 can also be stored. The computing unit 701, the ROM 702, and the RAM 703 are connected to each other via a bus 704. An input/output (I/O) interface 705 is also connected to the bus 704.

Multiple components in the electronic device 700 are connected to the I/O interface 705, including: an input unit 706, an output unit 707, a storage unit 708, and a communication unit 709. The input unit 706 can be any type of device that can input information to the electronic device 700, and the input unit 706 can receive input digital or character information, and generate key signal input related to user settings and/or function control of the electronic device. The output unit 707 can be any type of device that can present information, and can include but is not limited to a display, a speaker, a video/audio output terminal, a vibrator, and/or a printer. The storage unit 704 can include but is not limited to a disk and an optical disk. The communication unit 709 allows the electronic device 700 to exchange information/data with other devices through a computer network such as the Internet and/or various telecommunication networks, and may include but is not limited to a modem, a network card, an infrared communication device, a wireless communication transceiver and/or a chipset, such as a Bluetooth TM device, a WiFi device, a WiMax device, a cellular communication device and/or the like.

The computing unit 701 may be a variety of general and/or special processing components with processing and computing capabilities. Some examples of the computing unit 701 include but are not limited to a central processing unit (CPU), a graphics processing unit (GPU), various special artificial intelligence (AI) computing chips, various computing units running machine learning model algorithms, a digital signal processor (DSP), and any appropriate processor, controller, microcontroller, etc. The computing unit 701 performs various methods and processes described above. In some embodiments, the method of the embodiments of the invention may be implemented as a computer software program, which is tangibly contained in a machine-readable medium, such as a storage unit 704. In some embodiments, part or all of the computer program may be loaded and/or installed on the electronic device 700 via the ROM 702 and/or the communication unit 709. In some embodiments, the computing unit 701 may be configured to perform the method of the embodiments of the invention in any other appropriate manner (e.g., by means of firmware).

The program codes for implementing the method of the invention may be written in any combination of one or more programming languages. These program codes may be provided to a processor or controller of a general-purpose computer, a special-purpose computer, or other programmable data processing device, so that when the program codes are executed by the processor or controller, the functions/operations specified in the flowchart and/or block diagram are implemented. The program codes may be executed entirely on the machine, partially on the machine, partially on the machine as a stand-alone software package and partially on a remote machine, or entirely on a remote machine or server.

In the context of the invention, a machine-readable medium may be a tangible medium that may contain or store a program for use by or in conjunction with an instruction execution system, device, or apparatus. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media would include electrical connections based on one or more wires, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the foregoing.

As used in the invention, the terms "machine-readable medium" and "computer-readable medium" refer to any computer program product, device, and/or apparatus (e.g., disk, optical disk, memory, programmable logic device (PLD)) for providing machine instructions and/or data to a programmable processor, including a machine-readable medium that receives machine instructions as machine-readable signals. The term "machine-readable signal" refers to any signal for providing machine instructions and/or data to a programmable processor.

To provide interaction with a user, the systems and techniques described herein may be implemented on a computer having a display device (e.g., a CRT (cathode ray tube) or LCD (liquid crystal display) monitor) for displaying information to the user, and a keyboard and pointing device (e.g., a mouse or trackball) through which the user can provide input to the computer. Other types of devices may also be used to provide interaction with the user. For example, the feedback provided to the user may be any form of sensory feedback (e.g., visual feedback, auditory feedback, or tactile feedback). And the input from the user may be received in any form (including acoustic input, voice input, or tactile input).

The systems and techniques described herein may be implemented in a computing system including a backend component (e.g., as a data server), or a computing system including a middleware component (e.g., an application server), or a computing system including a frontend component (e.g., a user computer with a graphical user interface or a web browser through which the user can interact with an implementation of the systems and techniques described herein), or a computing system including any combination of such backend component, middleware component, or frontend component. The components of the system can be interconnected by digital data communication (e.g., communication network) in any form or medium. Examples of communication networks include: local area network (LAN), wide area network (WAN), and the Internet.

A computer system may include a client and a server. The client and the server are generally remote from each other and usually interact with each other through a communication network. The client-server relationship is generated by computer programs running on respective computers and having a client-server relationship with each other.

In the above embodiments, it can be implemented in whole or in part by software, hardware, firmware, or any combination thereof. When implemented using software, it can be implemented in whole or in part in the form of a computer program product. The computer program product includes one or more computer programs or instructions. When the computer programs or instructions are loaded and executed on a computer, the processes or functions described in the embodiments of the invention are executed in whole or in part. The computer may be a general-purpose computer, a special-purpose computer, a computer network, a terminal, a user device, or other programmable device. The computer programs or instructions may be stored in a computer-readable storage medium or transmitted from one computer-readable storage medium to another computer-readable storage medium, for example, the computer programs or instructions may be transmitted from one website, computer, server or data center to another website, computer, server or data center by wire or wireless means. The computer-readable storage medium may be any available medium that can be accessed by a computer or a data storage device such as a server or data center that are integrated with one or more available media. The available medium may be a magnetic medium, such as a floppy disk, a hard disk, or a tape; may also be an optical medium, such as a digital video disc (DVD), may also be a semiconductor medium, such as a solid state drive (SSD).

Although the invention has been described in conjunction with specific features and embodiments thereof, various modifications and combinations may be made thereto without departing from the spirit and scope of the invention. Accordingly, the present specification and the accompanying drawings are merely exemplary illustrations of the invention as defined by the appended claims and are deemed to have covered any and all modifications, variations, combinations or equivalents within the scope of the invention. Those skilled in the art may make various modifications and variations to the invention without departing from the spirit and scope of the invention. If these modifications and variations of the invention fall within the scope of the claims of the invention and their equivalents, the invention is also intended to include these modifications and variations.

## Claims

1. A method for transmitting communication data, performed by a gateway device connected with a user plane function network element, comprising:
receiving service data sent by the user plane function network element, wherein in a case that a first network fixed access device receives a service data sending request sent by a first user terminal and determines that a failure occurs to a fixed network accessed by the first network fixed access device, the service data is sent by the first network fixed access device to a first wireless network access device, and sent by the first wireless network access device to a core network, wherein the core network comprises the user plane function network element; and
sending the service data to a second user terminal connected with a second network fixed access device.

2. The method according to claim 1, wherein sending the service data to the second user terminal connected with the second network fixed access device comprises:
in a case that failure occurs to a fixed network accessed by the second network fixed access device, sending the service data to the user plane function network element, so that the user plane function network element sends the service data to a second wireless network access device, and the second wireless network access device sends the service data to the second network fixed access device, and the second network fixed access device sends the service data to the second user terminal.

3. The method according to claim 2, wherein the service data is a generic routing encapsulation (GRE) message encapsulated based on a GRE protocol; and sending the service data to the user plane function network element, so that the user plane function network element sends the service data to the second wireless network access device, and the second wireless network access device sends the service data to the second network fixed access device comprises:
sending the GRE message to the user plane function network element, so that the user plane function network element sends the GRE message to the second wireless network access device and the second wireless network access device sends the GRE message to the second network fixed access device.

4. The method according to claim 1, wherein the gateway device is connected with a network side core device; and sending the service data to the second user terminal connected with the second network fixed access device comprises:
in a case that a fixed network accessed by the second network fixed access device operates normally, sending the service data to the network side core device, so that the network side core device sends the service data to the second network fixed access device based on the fixed network accessed by the second network fixed access device, and the second network fixed access device sends the service data to the second user terminal.

5. The method according to claim 1, further comprising:
receiving device management data sent by the first network fixed access device or the second network fixed access device; and
sending the device management data to a network management system (NMS) network element connected with the gateway device.

6. A method for transmitting communication data, performed by a second network fixed access device, comprising:
receiving service data sent by a gateway device, wherein in a case that a first network fixed access device receives a service data sending request sent by a first user terminal and determines that a failure occurs to a fixed network accessed by the first network fixed access device, after the first network fixed access device sends the service data to a first wireless network access device, and the first wireless network access device sends the service data to a core network, the service data is sent to the gateway device through a user plane function network element of the core network; and
sending the service data to a second user terminal.

7. An apparatus for transmitting communication data, contained within a gateway device connected with a user plane function network element, comprising:
a first receiving module, configured to receive service data sent by the user plane function network element, wherein in a case that a first network fixed access device receives a service data sending request sent by a first user terminal and determines that a failure occurs to a fixed network accessed by the first network fixed access device, the first network fixed access device sends the service data to a first wireless network access device, and the first wireless network access device sends the service data to a core network, wherein the core network comprises the user plane function network element; and
a first sending module, configured to send the service data to a second user terminal connected with a second network fixed access device.

8. An apparatus for transmitting communication data, contained within a second network fixed access device, comprising:
a second receiving module, configured to receive service data sent by a gateway device, wherein in a case that a first network fixed access device receives a service data sending request sent by a first user terminal and determines that a failure occurs to a fixed network accessed by the first network fixed access device, after the first network fixed access device sends the service data to a first wireless network access device, and the first wireless network access device sends the service data to a core network, the service data is sent to the gateway device through a user plane function network element of the core network; and
a second sending module, configured to send the service data to a second user terminal.

9. A gateway device, comprising:
a processor; and
a memory storing a program,
wherein the program comprises instructions, which when executed by the processor, cause the processor to perform the method according to any one of claims 1 to 5.

10. A second network fixed access device, comprising:
a processor; and
a memory storing a program,
wherein the program comprises instructions, which when executed by the processor, cause the processor to perform the method according to claim 6.

11. A non-transitory computer readable storage medium, having computer instructions stored thereon, wherein the computer instructions are used to enable a computer to perform the method according to any one of claims 1-5 or claim 6.

12. A communication data transmission system, comprising: a gateway device connected with a user plane function network element, a first network fixed access device that accesses a fixed network, and a second network fixed access device that accesses a fixed network;
wherein the first network fixed access device is configured to, in a case of receiving a service data sending request sent by a first user terminal and determining that a failure occurs to the fixed network accessed by the first network fixed access device, send the service data to a first wireless network access device to enable the first wireless network access device to send the service data to the user plane function network element of a core network; and
the gateway device is configured to receive the service data sent by the user plane function network element and send the service data to a second user terminal connected with the second network fixed access device.

13. A computer program product comprising instructions, which when executed by a processor, cause the processor to perform the method according to any one of claims 1-5 or claim 6.
